# FASCICULE DE BREVET EUROPEEN

(11) **EP 0 876 575 B1**
(45) Date de publication et mention de la délivrance du brevet: **17.10.2001**
(21) Numéro de dépôt: 97900665.7
(22) Date de dépôt: 17.01.1997
(51) Int. Cl.: F24J 2/54

(54) **CAPTEUR SOLAIRE A DISPOSITIF PYRAMIDAL ORIENTABLE**
SOLARKOLLEKTOR MIT PYRAMIDENFÖRMIGER DREHBARER VORRICHTUNG
SOLAR COLLECTOR WITH AN ADJUSTABLE PYRAMIDAL DEVICE

(30) Priorité: 24.01.1996 FR 9600782
(43) Date de publication de la demande: 11.11.1998
(73) Titulaire: Gallois-Montbrun, Roger, 75005 Paris (FR)
(72) Inventeur: Gallois-Montbrun, Roger, 75005 Paris (FR)
(74) Mandataire: CAPRI SARL
(86) Numéro de dépôt international: FR9700086
(87) Numéro de publication internationale: WO9727436

(56) Documents cités:
- EP-A- 0 384 839
- US-A- 4 509 501
- PATENT ABSTRACTS OF JAPAN vol. 9, no. 69 (E-305), 29 Mars 1985 & JP 59 205769 A (NIPPON DENKI KK), 21 Novembre 1984,

## Description

La présente invention concerne un capteur solaire photovoltaïque à dispositif pyramidal orientable dont la forme et les mécanismes sont avantageusement combinés de manière à éliminer les inconvénients généralement présentés par ce type de capteur.

### REALISATIONS ANTERIEURES A L'INVENTION

Par capteur solaire on entend tout dispositif sur lequel sont montés des moyens de captage de l'énergie solaire, tels que des modules photovoltaïques.

Le brevet japonais JP-A-59 205 769 décrit un dispositif de capteur solaire à structure pyramidale comportant une base et au moins trois faces. La pyramide est fixe et toutes les faces sont garnies de capteurs solaires.

On connaît déjà des capteurs solaires plans, constitués par une structure généralement rectangulaire sur laquelle sont fixées les cellules photovoltaïques, et manoeuvrées par les mécanisme de poursuite en azimut et en site.

De tels dispositifs sont notamment décrits dans les documents FR-A-2 415 271 et FR-A-2 418 912.

Ces capteurs solaires présentent un certain nombre d'inconvénients. On a constaté par exemple que les capteurs plans orientables résistent mal au vent, et que même les positions dites de sécurité (position horizontale ou verticale « en drapeau ») qui leur sont alors données, ne les mettent pas pour autant à l'abri des vents tourbillonnaires.

Le dispositif décrit dans le document EP-A-0 384 839 élimine ces inconvénients.

Ce dispositif est constitué par deux panneaux de forme rectangulaire allongée montés sur les faces avant et arrière d'une structure en forme de toit à deux pentes et articulés sur un axe horizontal de rotation commun coïncidant avec l'arête faîtière de la structure. Cette structure, manoeuvrée par des mécanismes d'orientation en azimut, tourne autour d'un axe vertical pour maintenir sa face frontale en direction du soleil, tandis que le capteur plan constitué par l'assemblage des panneaux avant et arrière, manoeuvré par des mécanisme d'orientation en site, tourne autour de son axe horizontal pour garder une inclinaison normale aux rayons solaires.

La protection de ce capteur plan contre le vent est assurée par une manoeuvre consistant à rabattre les panneaux avant et arrière sur les faces correspondantes de la structure en forme de toit à deux pentes.

Si la forme fonctionnelle de ce dispositif résiste beaucoup mieux au vent et permet le montage de puissants capteurs à poursuite souvent exigés dans les programmes industriels et commerciaux, elle peut par contre créer des problèmes d'ordre architectural quand ce dispositif est monté sur des maisons d'habitation, et c'est pour résoudre de tels problèmes que l'inventeur s'est mis à rechercher un type de dispositif dont les mécanismes seraient combinés avec une forme mieux adaptée à l'architecture traditionnelle des programmes d'habitation. Cet objectif a été pleinement atteint avec le dispositif de la présente invention, telle que défini par la partie caractérisante de la revendication 1.

Ce dispositif pyramidal peut être pourvu en outre avec un deuxième système, opérant en site, permet à ladite face, par une rotation autour d'un axe horizontal, de garder une inclinaison normale aux rayons solaires.

Des capteurs photovoltaïques ont été déjà montés sur des structures pyramidales fixes, de même que des systèmes de poursuite sur des capteurs photovoltaïques afin d'augmenter leur production en électricité, mais jamais encore n'avaient été combinés sur une structure pyramidale les montages d'un capteur photovoltaïque et de systèmes de poursuite, et c'est précisément cette combinaison qui constitue l'idée de base de la présente invention.

En ce qui concerne maintenant la description qui va suivre de ce dispositif pyramidal, il importe de bien noter que la pyramide à trois faces adoptée de préférence dans la présente étude doit être considérée comme un exemple non limitatif. Ce type de pyramide a été adopté en raison de ses appréciables avantages : Structure plus simple et faces plus grandes permettant en conséquence le montage d'un plus grand capteur sur la face solaire, mais il est toujours possible, bien sûr, d'augmenter s'il le fallait le nombre des faces de la pyramide.

La même remarque peut être faite en ce qui concerne les types de mécanismes de poursuite utilisés dans la présente étude et qui ne sont également donnés qu'à titre d'exemples.

### DESCRIPTION SUCCINCTE DES DESSINS

- La figure 1 est une vue à vol d'oiseau de la pyramide à trois faces.
- La figure 2 est une vue schématique en plan du dispositif, au-dessous de la pyramide dont les faces sont indiquées en pointillé, montrant les mécanismes d'orientation du dispositif.
- La figure 3 est une vue schématique en coupe du dispositif correspondant au plan transversal C de la figure 2, montrant en élévation l'ensemble mobile du dispositif et ses parties fixes.
- La figure 4 représente, à plus grande échelle, le détail D de la figure 3.

### DESCRIPTION DETAILLEE

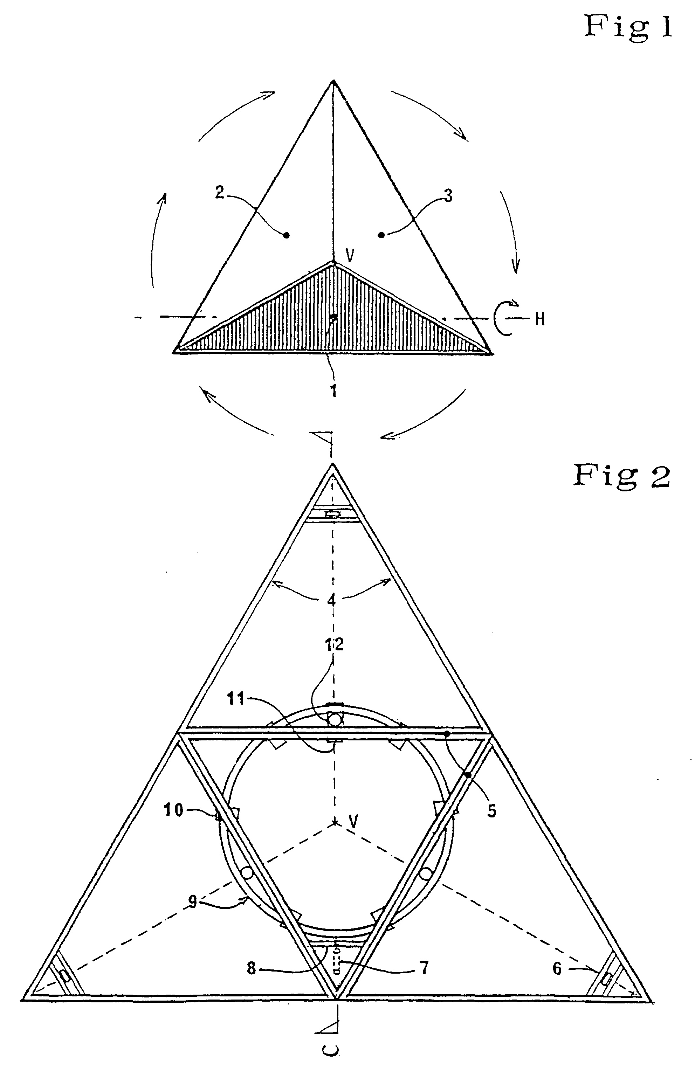

FIG. 1 - Cette figure montre schématiquement la pyramide à trois faces du dispositif, montée sur une base triangulaire avantageusement équilatérale (4), avec sa face (1) utilisée comme capteur solaire plan, ses deux autres faces (2,3) ne servant qu'à protéger l'ensemble du dispositif contre le vent. On a donné aux dites faces (1,2,3) la forme avantageuse de triangles isocèles rectangles parce que les angles de 45° qu'ils ont à leur base facilitent le montage des modules photovoltaïques sur la face solaire (1).
   Cette figure montre aussi schématiquement les deux systèmes de poursuite qui, opérant respectivement en azimut et en site, permettent à la pyramide de tourner autour de son axe vertical (V), et à la face solaire (1) de tourner autour d'un axe horizontal (H).
FIG. 2,3,4 - Ces figures montrent schématiquement, en plan et en élévation, la base (4) de la pyramide ainsi que les mécanismes du dispositif assurant son soutien et ses manoeuvres, et qui comprennent des éléments faisant partie de l'ensemble mobile et des éléments fixés sur la plate-forme.

### Base (4) de la pyramide

Cette structure est constituée de préférence par quatre triangles équilatéraux identiques, assemblés dans un même plan horizontal. Ce type d'assemblage présente deux avantages :
- Il permet d'abord d'utiliser des fers de mêmes dimensions, de moindre longueur, et par conséquent moins coûteux, plus faciles à transporter, à stocker et à monter.
- Il permet aussi de créer au centre de la base (4) une structure de renfort (5) dont la forme triangulaire permet à ladite base (4) d'avoir un appui bien équilibré sur la couronne (9) à laquelle elle est fixée.

### Mécanismes faisant partie de l'ensemble mobile

- Roues à galets (6), prévues avantageusement sur les trois axes de la pyramide et montées sur la sous-face de sa base (4). Ces trois roues servent à réduire, au delà de la couronne (9) qui la supporte, les porte-à-faux de la pyramide.
- Vérin électrique (7), par exemple articulé à sa base sur la traverse longitudinale (8) de la base (4) et à l'extrémité de sa tige sur la face (1) de la pyramide, inclinable et équilibrée autour de son axe horizontal de rotation (H), au-dessous du dit axe (H) afin de réduire la manoeuvre du dit vérin (7). Ainsi automatiquement manoeuvrée autour de son axe horizontal de rotation (H) par ledit vérin (7), la face (1) de la pyramide garde une inclinaison normale aux rayons solaires, ou reprend l'inclinaison fixe des autres faces de la pyramide, ce qui se produit normalement en fin de journée ou toutes les fois que la force du vent, détectée par un dispositif approprié, risque d'endommager ladite face (1) (manoeuvre de sécurité).
- Couronne (9) constituée de préférence, comme le montre la figure (4), par un fer UAP sur lequel le renfort central triangulaire (5) de la base (4) de la pyramide peut être solidement fixé en six points, comme le montre la figure 2. Cette couronne (9) constitue l'élément le plus bas de l'ensemble mobile du dispositif.

### Mécanismes fixés sur la plate-forme

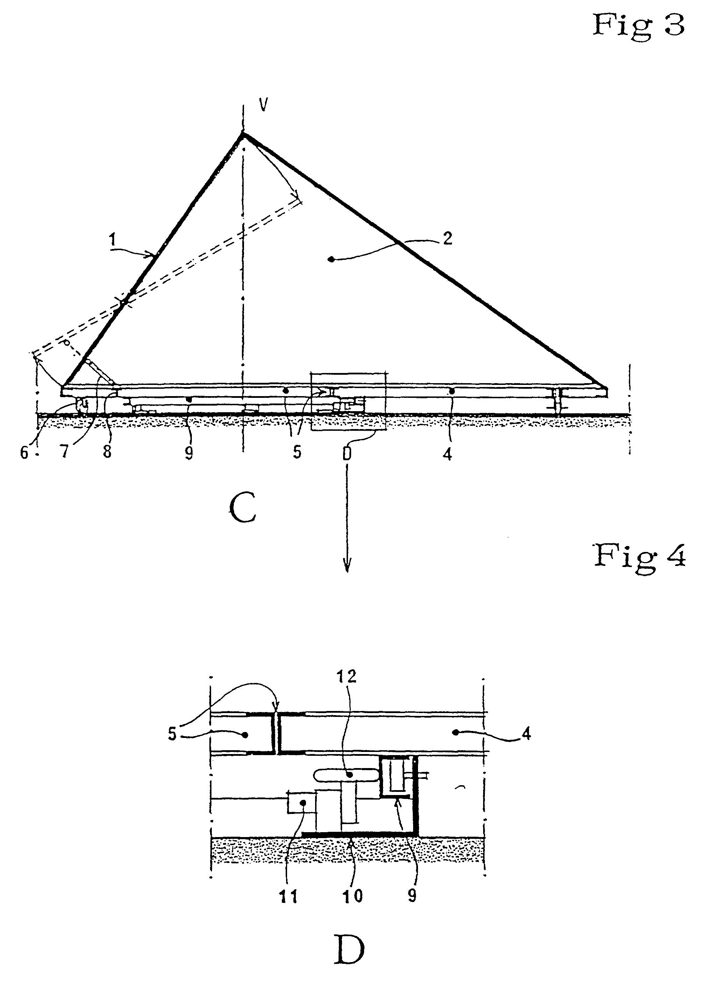

- Dispositifs corniers (10) dont les galets, comme le montre la figure 4, assurent le support et permettent la rotation de la couronne (9).
- Moteur électrique (11) assurant par sa roue d'entraînement, comme le montre la même figure (4), la rotation de la couronne (9).
- Deux roues centreuses (12) constituant avec la roue d'entraînement du moteur (11) un montage triangulaire, comme le montre la figure 2, assurant le centrage de la couronne (9).

La description de ces dessins prouve que les montages de capteurs photovoltaïques et de systèmes de poursuite sur des structures pyramidales sont parfaitement compatibles, et c'est sur cette compatibilité qu'est basée la présente invention.

Grâce à cette combinaison de forme et de mécanismes, le dispositif de capteur solaire de la présente invention présente d'appréciables avantages :
- Ses mécanismes de poursuite permettent aux modules photovoltaïques d'avoir une production électrique correspondant à leur puissance crête.
- Sa forme résiste bien au vent.
- Il peut être monté sans problèmes sur des maisons, ce qui est exceptionnel pour un dispositif de capteur solaire photovoltaïque à poursuite, car il a la forme d'un toit bien adapté à leur architecture traditionnelle.

## Revendications

1. Dispositif de capteur solaire photovoltaïque ayant une structure pyramidale comportant une base (4) et au moins trois faces (1, 2, 3), **caractérisé en ce qu'**une seule desdites faces (1, 2, 3) est une face solaire (1) sur laquelle sont montés des moyens de captage de l'énergie solaire tels que des modules photovoltaïques constituant le capteur solaire plan du dispositif, lesdites au moins deux autres faces (2, 3) ne servant qu'à protéger l'ensemble du dispositif contre le vent, et **en ce que** ledit dispositif est aussi pourvu d'un premier système de poursuite qui, opérant en azimut, permet à ladite structure pyramidale, par une rotation autour d'un axe vertical (V), de maintenir ladite face solaire (1) en direction du soleil.

2. Dispositif selon la revendication 1, dans lequel ledit premier système de poursuite comporte une couronne (9) sur laquelle est fixée la base (4) de la structure pyramidale et qui, actionnée par un moteur électrique (11), tourne sur des galets de dispositifs corniers (10).

3. Dispositif selon la revendication 1 ou 2, pourvu d'un deuxième système de poursuite qui, opérant en site, permet à ladite face solaire (1) de la structure pyramidale, par une rotation autour d'un axe horizontal (H), de garder une inclinaison normale aux rayons solaires.

4. Dispositif selon la revendication 3, dans lequel ledit second système de poursuite comporte un vérin électrique (7), articulé aux deux extrémités sur lesdites base (4) et face solaire (1) de la structure pyramidale.

5. Dispositif selon la revendication 3, dans lequel l'axe horizontal de rotation (H) est monté de manière à équilibrer les parties haute et basse de ladite face (1), et à en faciliter ainsi la manoeuvre par ledit vérin (7).

6. Dispositif selon la revendication 1, dans lequel ladite structure pyramidale comporte une base (4) en forme de triangle équilatéral, et trois faces (1, 2, 3) en forme de triangles isocèles rectangles.

## Patentansprüche

1. Photovoltaische Sonnenkollektorvorrichtung mit pyramidenförmigem Aufbau, aufweisend eine Basis (4) und zumindest drei Seiten (1, 2, 3), **dadurch gekennzeichnet, dass** eine einzige der Seiten (1, 2, 3) eine Solarseite (1) ist, auf welcher Sonnenenergiekollektormittel sowie photovoltaische Module angebracht sind, welche die Sonnenkollektorebene der Vorrichtung bilden, wobei die zumindest zwei weiteren Seiten (2, 3) nur dazu dienen, die gesamte Vorrichtung gegenüber Wind zu schützen, und dass die Vorrichtung außerdem mit einem ersten auf den Azimut bezogenen Nachsteuersystem versehen ist, welches es der Pyramidenstruktur erlaubt, durch Drehung um eine vertikale Achse (V) die Sonnenfläche (1) in Richtung zur Sonne zu halten.

2. Vorrichtung nach Anspruch 1, wobei das erste Nachsteuersystem einen Drehring (9) umfasst, auf welchem die Basis (4) des Pyramidenaufbaus fest angebracht ist, und der, betätigt durch einen Elektromotor (11) sich auf Winkelprofilrollen (10) dreht.

3. Vorrichtung nach Anspruch 1 oder 2, die mit einem zweiten Nachsteuersystem versehen ist, das es der Sonnenseite (1) des Pyramidenaufbaus durch eine Drehung um eine horizontale Drehachse (H) im Vorortbetrieb erlaubt, eine geeignete Schrägstellung gegenüber den Sonnenstrahlen aufrechtzuerhalten.

4. Vorrichtung nach Anspruch 3, wobei das zweite Nachsteuersystem einen elektrischen Stellantrieb (7) umfasst, der mit beiden Enden auf der Basis (4) und der Sonnenfläche (1) des Pyramidenaufbaus angelenkt ist.

5. Vorrichtung nach Anspruch 3, wobei die horizontale Drehachse (H) derart angebracht ist, dass sie die oberen und unteren Teile der Seite (1) ins Gleichgewicht bringt, und dass sie dadurch die Betätigung durch den Stellantrieb (7) erleichtert.

6. Vorrichtung nach Anspruch 1, wobei der Pyramidenaufbau eine Basis (4) in Form eines gleichseitigen Dreiecks und drei Seiten (1, 2, 3) in Form gleichschenkliger rechtwinkliger Dreiecke umfasst.

## Claims

1. Solar collector device having a pyramid-shaped structure comprising a base (4) and at least three faces (1, 2, 3), **characterized in that** only one of said faces (1, 2, 3) is a solar face (1) having solar energy collecting means mounted thereon such as photovoltaic cells for providing a plane solar collector, said at least two other faces (2, 3) serving merely to protect the overall device from the wind, and **in that** said device is also provided with a first tracking system which, operating in azimuth, enables said pyramid-shaped structure, by a rotation about a vertical axis (V), to maintain said solar face (1) in the direction of the sun.

2. Device, according to claim 1, wherein said first tracking system comprises a ring (9) on which the pyramid-shaped structure base (4) is fixed and which, driven by an electric motor (11), turns on angle-shaped rollers (10).

3. Device, according to claim 1 or 2, provided with a second tracking system which, operating in elevation, enables said solar face (1) of the pyramid-shaped structure, by a rotation about a horizontal axis (H), to keep an inclination normal to the sun's rays.

4. Device, according to claim 3, wherein said second tracking system comprises an electric jack (7), hinged a both ends to said pyramid base (4) and solar face (1).

5. Device, according to claim 3, wherein said horizontal axis of rotation (H) is mounted so as to balance said solar face (1) upper and lower parts, and thus make said inclinable solar face more easily maneuverable by said jack (7).

6. Device, according to claim 1, wherein said pyramid-shaped structure comprises a base (4) having the form of an equilateral triangle and three faces (1, 2, 3) having the form of rectangular isosceles triangles.
